# EUROPEAN PATENT APPLICATION

(11) **EP 1 914 743 A1**
(43) Date of publication of application: **23.04.2008**
(21) Application number: 06781939.1
(22) Date of filing: 28.07.2006
(51) Int. Cl.: G11B 7/24

(54) **OPTICAL DISC AND OPTICAL DISC REPRODUCTION DEVICE**

(30) Priority: 08.08.2005 JP 2005229281
(71) Applicant: National Institute of Advanced Industrial Science and Technology, Tokyo 100-8921 (JP); Samsung Electronics Co., Ltd., Yeongtong-gu Suwon-city, Gyeonggi-do 442-742 (KR)
(72) Inventor: SHIMA, Takayuki, Tsukuba-shi Ibaraki 3058562 (JP); TOMINAGA, Junji, Tsukuba-shi Ibaraki 3058562 (JP); NAKANO, Takashi, Tsukuba-shi Ibaraki 3058562 (JP); KIKUKAWA, Takashi, Chuo-ku, Tokyo 1038272 (JP); FUKUZAWA, Narutoshi, Chuo-ku, Tokyo 1038272 (JP); KOBAYASHI, Tatsuhiro, Chuo-ku, Tokyo 1038272 (JP); KIM, Joo-ho, Gyeonggi-do, 442742 (KR); HWANG, In-oh, Gyeonggi-do, 442742 (KR)
(74) Representative: Hartig, Michael
(86) International application number: PCT/JP2006/315029
(87) International publication number: WO 2007/018059

(57) **Abstract**

An optical disk primarily includes a recording layer and a viscosity-variable material layer. When a laser beam is irradiated to reproduce a record written on the recording layer, part of the crystalline thin layer of the viscosity-variable material layer is softened to vary the optical constant of the softened region. Consequently, a plane having discontinuous optical constants is produced at the boundary between the softened region and the other region, so that a ring-shaped specific region is produced in a light spot. The ring-shaped specific region allows record patterns smaller than or equal to the resolution limit to be reproduced with the same signal intensity as that of the other record patterns larger than the resolution limit.

## Description

### BACKGROUND OF THE INVENTION

### 1. Field of the Invention

The present invention relates to optical disks that reproduce information by exposing record marks to a laser beam, and particularly to an optical disk that has a additional structure for reproducing record marks smaller than or equal to the resolution limit and that can therefore reproduce not only record marks larger than or equal to the resolution limit, but also record marks smaller than or equal to the resolution limit. The present invention also relates to optical disk reproducing devices, and particularly to an optical disk reproducing device that can reproduce record marks including those smaller than or equal to the resolution limit.

### 2. Description of the Related Art

An optical disk, such as a compact disk or a digital video disk, includes a recording layer, a dielectric layer for controlling the reflectance to read records with a laser beam and for protecting the recording layer, and a reflection layer, on a substrate.

The record is constituted of two portions having different reflectances. One of the portions is called record mark. The record mark can be reproduced by a reproduction optical system that can emit a laser beam with a wavelength λ and has an objective lens with a numerical aperture NA when the record mark has a length more than the resolution limit (λ/4NA) in the laser scanning direction. The resolution limit is about half the diffraction limit (λ/2NA) of light.

In order to achieve a high density optical disk, it is necessary to reduce the wavelength λ or to increase the numerical aperture NA. Unfortunately, if the wavelength of the laser beam is reduced to smaller than 405 nm, which is a wavelength beginning to be used, it becomes necessary that conventionally used materials transparent in the visible wavelength region be replaced with a material transparent in the ultraviolet wavelength region. Also, if the NA is increased to higher than 0.85, the distance between the optical disk and the optical pickup for irradiating a laser beam and detecting reflected light is reduced to be close, and accordingly, they become liable to come into contact unintentionally. This increases the risk of recorded data corruption.

In order to reproduce record marks smaller or equal to the resolution limit, an approach has been proposed in which an additional structure for reducing the size of the laser beam spot is provided in the optical disk. For this additional structure, a study of using a specific material has been conducted. For example, Japanese Patent No. 3160632 has proposed a material whose phase is turned into a liquid phase by irradiating the material with a laser beam to increase the temperature. A semiconductor material having a variable forbidden band has also been proposed by M. Yamamoto, G. Mori, H. Tajima, N. Takamori and A. Takahashi, Japanese Journal of Applied Physics 43,4959 (2004).

The size of the laser beam spot irradiating the optical disk depends on the power of the laser beam. Accordingly, either material requires that an optimal laser power for super resolution reproduction be set for each record pattern size.

### SUMMARY OF THE INVENTION

Accordingly, the invention provides an optical disk that can reproduce not only record marks larger than or equal to the resolution limit, but also record marks smaller than or equal to the resolution limit. The optical disk includes a recording layer and a material layer having a variable viscosity, on a substrate.

The invention is also directed to a reproducing device for the optical disk. The reproducing device includes a mechanism for reproducing a record pattern smaller than or equal to the optical resolution limit with light having a light intensity capable of, or heat having a temperature capable of reducing the viscosity of the material layer.

The optical disk of the invention uses the material layer having a variable viscosity, and a plane having discontinuous refractive indices is produced in the material layer by laser beam irradiation. The plane having discontinuous refractive indices allows the optical disk of the invention to reproduce record marks with various sizes smaller than or equal to the resolution limit. In particular, the laser power for super resolution reproduction can be constant irrespective of the size of the record mark.

In addition, the optical disk of the invention can achieve super resolution reproduction with a high carrier-to-noise ratio.

### BRIEF DESCRIPTION OF THE DRAWINGS

Fig. 1 is a sectional view of an optical disk according to an embodiment of the present invention;
Fig. 2 is a representation of the reproduction principle of the optical disk according to an embodiment of the invention;
Fig. 3 is a chart of the relationship between the reproduction laser power and the carrier-to-noise ratio of an optical disk according to an embodiment of the invention;
Fig. 4 is a sectional view of an optical disk according to an embodiment or the invention;
Fig. 5 is a sectional view of an optical disk according to an embodiment of the invention in which a void is formed, the sectional view being taken by transmission electron microscopy;
Fig. 6 is a chart of the changes in temperature of a material Sb₂Te measured by differential thermal analysis;
Fig. 7 is a chart of the changes in reflectance at the surface of the material Sb₂Te;
Fig. 8 is an oscilloscope photograph of spike-like reflectance noises that occur when the high-viscosity crystal phase of an optical disk according to an embodiment of the invention is turns into a low-viscosity crystal phase, observed with an optical disk evaluation apparatus;
Fig. 9 is a chart of the relationship between the reproduction laser power and the carrier-to-noise ratio of an optical disk according to an embodiment of the invention;
Fig. 10 is a chart of the relationship between the reproduction laser power and the carrier-to-noise ratio of an optical disk according to an embodiment of the invention;
Fig. 11 is a sectional view of an optical disk according to an embodiment of the invention; and
Fig. 12 is a chart of the relationship between the carrier-to-noise ratio of the reproduction signals and the pit length when the thickness of a second dielectric layer is varied.

### DESCRIPTION OF THE PREFERRED EMBODIMENTS

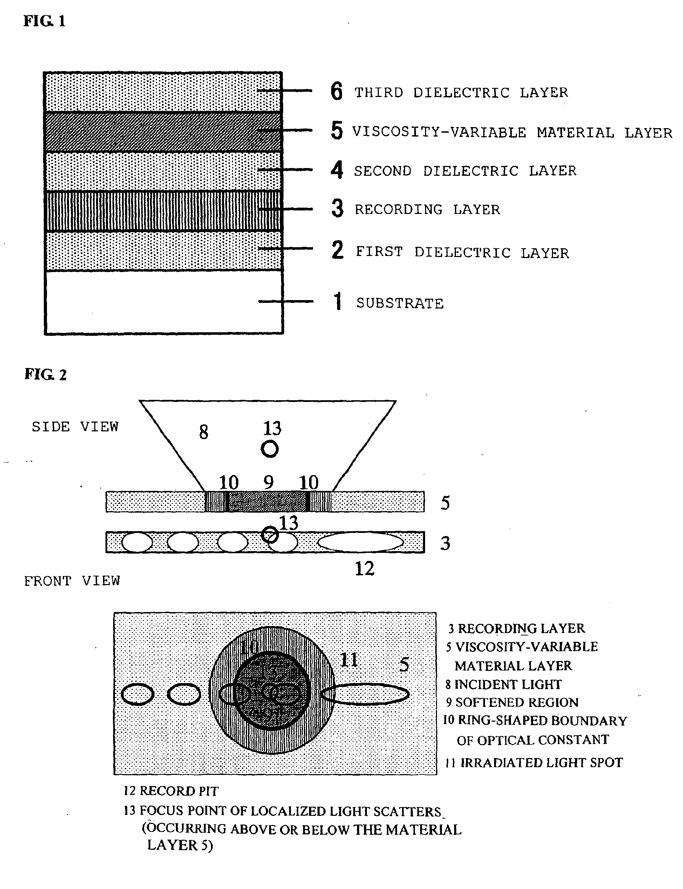

Fig. 1 is a sectional view of an optical disk according to an embodiment of the present invention. The optical disk primarily includes a recording layer 3 and a material layer 5 having a variable viscosity.

For reproducing the information recorded on the recording layer 3, the recording layer 3 is irradiated with a laser beam. At this point, part of the viscosity-variable material layer 5, which is in a crystalline thin film, is softened and the optical constant of the softened portion is varied. Consequently, there occurs a plane having discontinuous optical constants at the boundary between the unsoftened portion and the softened portion. In use of a laser beam as the light source, the light in the focus spot, as shown in Fig. 2, or the heat generated by the light has an intensity exhibiting a normal distribution, or Gaussian distribution. Accordingly, the plane having discontinuous optical constants has specific ring-shaped or partially ring-shaped regions in the light spot. The specific ring-shaped or partially ring-shaped region allows record patterns smaller than or equal to the resolution limit to be reproduced with the same signal intensities as the other record patterns.

The viscosity of the viscosity-variable material layer 5 is reduced in a high-temperature region at light intensities or temperatures higher than or equal to a threshold. Consequently, a void is produced in the material layer 5 due to a balance between the material flow and the internal stress. The void is considered to be in a vacuum state. The occurrence of the void can be confirmed by observing the decrease in reflectance (or increase in transmittance) through an optical microscope, or by observing the cross section through a transmission electron microscope.

In this process, the optical constants, such as refractive index, reflectance at the disk, and transmittance, are significantly varied. By previously knowing the light intensity at which these variations occur, using tracks in regions other than the record region of the disk, the threshold reproduction power can be determined at which a plane having discontinuous refractive indices necessary for super resolution is produced.

In the known super resolution reproduction using a liquid phase and optical bandgap, regions for super resolution reproduction (referred to as optical apertures) are produced at a light intensity or temperature higher than or equal to a threshold. These regions are in circular or elliptic forms, including high-temperature regions. If the light intensity or temperature increases to higher than or equal to the threshold, the super resolution regions (optical apertures) increase in area, depending on the intensity. Accordingly, in order to read signal record patterns with various random sizes, a complex electrical circuit is required which controls light intensity or temperature according to the patterns.

On the other hand, the optical disk of the invention uses the plane having discontinuous optical constants in the boundary between the high-temperature low-viscosity region and the low-temperature high-viscosity region of a crystalline material for super resolution reproduction. Consequently, all pits with various lengths can be reproduced into signals with substantially the same intensity, at a single reproducing laser power, without controlling the reproduction power according to pits with random patterns.

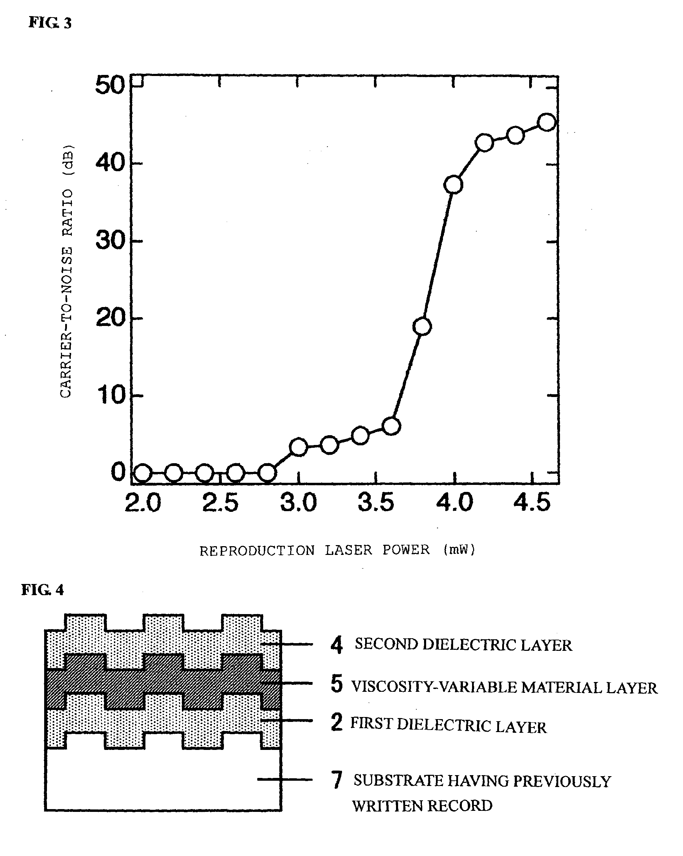

Fig. 3 shows the relationship between the carrier-to-noise ratio and the reproduction laser power of an optical disk according to an embodiment of the invention. The reproduction laser power is varied in a state where a record mark with a length of 200 nm, which is a length smaller than or equal to the resolution limit, is written on the optical disk (in this experiment, the laser has a wavelength of 635 nm; the condenser lens has a NA of 0.60; then, the resolution limit is 635/4/0.60 = 265 nm; hence the mark of 200 nm in length cannot be reproduced). Then, the carrier-to-noise ratio increases to 40 dB or more at a laser power of 4.2 mW or more, which is higher than the laser power 4.0 mW producing the plane having discontinuous refractive indices, as shown in Fig. 3.

In another known super resolution optical disk, the area of the super resolution region increases depending on the reproduction laser intensity, and the threshold power varies 1 mW or more. On the other hand, since the optical disk of the invention uses the plane having discontinuous refractive indices, the variation of the threshold power is as small as 0.5 mW or less in reproduction for pits with any length. Hence, once the reproduction power is set at about 0.5 mW higher than the threshold, it does not need to be adjusted for each reproduction.

The plane having discontinuous refractive indices is produced probably by the changes in electronic polarizability of the elements constituting the crystal phase of the material resulting from crystalline phase transition, unlike by the change into a liquid phase or change in forbidden band width. In addition, a stress between thin layers of the optical disk may cause metal/nonmetal phase transition, such as Peierls transition, thereby producing the plane having discontinuous refractive indices, but the mechanism of the occurrence of the refractive index-discontinuous plane has not been known in detail. It is believed that the occurrence of the refractive index-discontinuous plane depends, not only on temperature distribution, but also on laser beam power distribution.

For reproduction, when a laser beam 8 enters the material layer 5, which is to be softened by a laser beam with an intensity higher than or equal to the threshold laser power, part of the material layer 5 (laser spot region 11) is softened to produce a softened region 9, as shown in Fig..2. The softened region 9 has a different optical constant (for example, refractive index) from the other region. Consequently, the optical constant becomes discontinuous at the boundary between the regions. According to the principles of Fourier optics, this means that the boundary includes many high spatial frequency components. Accordingly, as the thickness of the optical constant-discontinuous plane is reduced, a larger number of localized light scatters are produced. At this point, the boundary of the optical constants is defined by a Gaussian distribution of the laser beam intensity, and thus forms into a ring 10 or substantially a ring. If the localized light scatters around the ring are away from the material layer 5, they are focused on a portion 13 by their interaction so as to keep the vector potential constant. The focused point of the localized light scatters depends on the difference in optical constant between the softened region 9 and the other region and on the thickness of the boundary, irrespective of the size of the softened region 9. Accordingly, if a record pit or the like smaller than or equal to the diffraction limit is disposed at the focused point, the focused light of the localized light scatters can sensitively reproduce the minute pit with large signal intensities.

The invention will be further described using preferred embodiments.

As shown in Fig. 1, an optical disk includes a first dielectric layer 2, a recording layer 3, a second dielectric layer 4, a viscosity-variable material layer 5, and a third dielectric layer 6, formed on a substrate 1 in that order. In the embodiment shown in Fig. 1, the recording layer 3 is disposed closer to the substrate 1 than the viscosity-variable material layer 5 is. However, the positions of the recording layer 3 and the viscosity-variable material layer 5 may be replaced with each other; hence, the layers may be formed on the substrate 1 in this order: the first dielectric layer 2, the viscosity-variable material layer 5, the second dielectric layer 4, the recording layer 3, and the third dielectric layer 6.

The substrate may have a geometric record in advance, such as asperities, as shown in Fig. 4, a sectional view of an optical disk according to another embodiment. In this embodiment, the optical disk has the structure including a first dielectric layer 2, a viscosity-variable material layer 5, and a second dielectric layer 4, formed on a substrate 7.

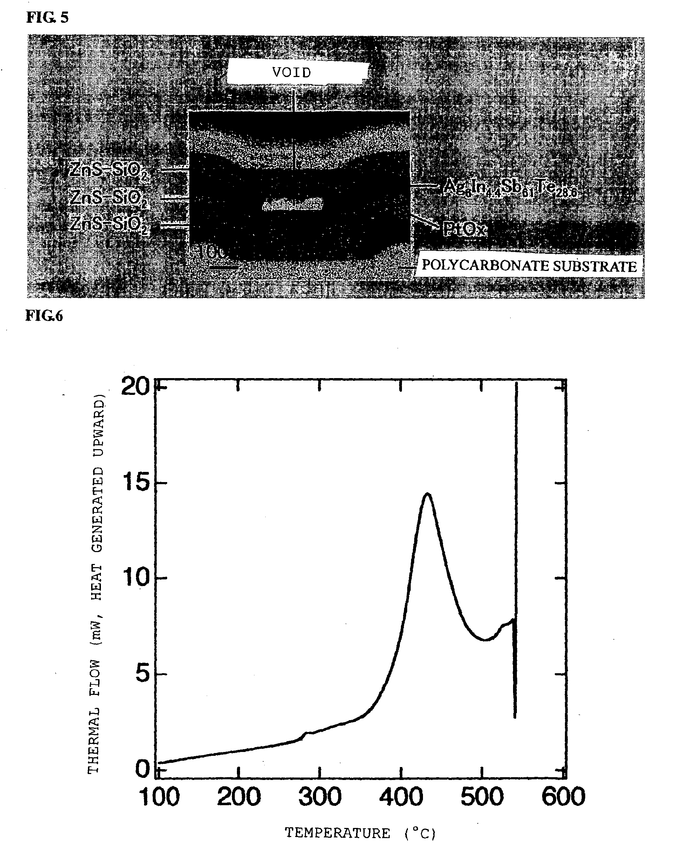

When the viscosity-variable material layer 5 is irradiated with a reproduction laser beam with the optical disk turning in a disk evaluation apparatus, a void is produced at a laser power that is expected to produce a plane having discontinuous refractive indices, depending on the structure of the disk. Fig. 5 shows the void observed by transmission electron microscopy. The occurrence of the void suggests that the high-viscosity crystal phase of the material layer has been turned into a low-viscosity crystal phase.

The material layer has protuberances at the boundary with the void. This is clear evidence that the material layer is shrunk by internal stress during the formation of the void to control the internal stress (see Fig. 5).

It has been confirmed by computer simulation that the temperature at this point is in the range about 350 to 400°C. The void is produced at a temperature lower than the melting point of the material layer, that is, 544°C; hence, the material layer is not melted yet in this stage. It can also be confirmed by differential thermal analysis or the like that the crystal phase of the material layer is turned into a crystal phase having a lower viscosity.

Fig. 6 shows the results of differential thermal analysis of a Sb₂Te-based material layer using its bulk pellet. A significant exothermic reaction occurred at a temperature of 400 to 500°C. Although the phase diagram of this material shows it has a melting point of 544°C, the melting point obtained from the measurement the inventors made was 541°C.

It has been confirmed in advance by X-ray diffraction analysis or the like that the pellet is defined by a crystal phase. The exothermic peak at a temperature of 400 to 500°C shown in Fig. 6 suggests that the crystal phase turns into another crystal phase with another crystalline structure. An excess internal energy is released (which is indicated by the exothermic peak at the temperature of 400 to 500°C observed by differential thermal analysis), and thereby the crystal phase is turned into a different phase that is more stable at high temperatures.

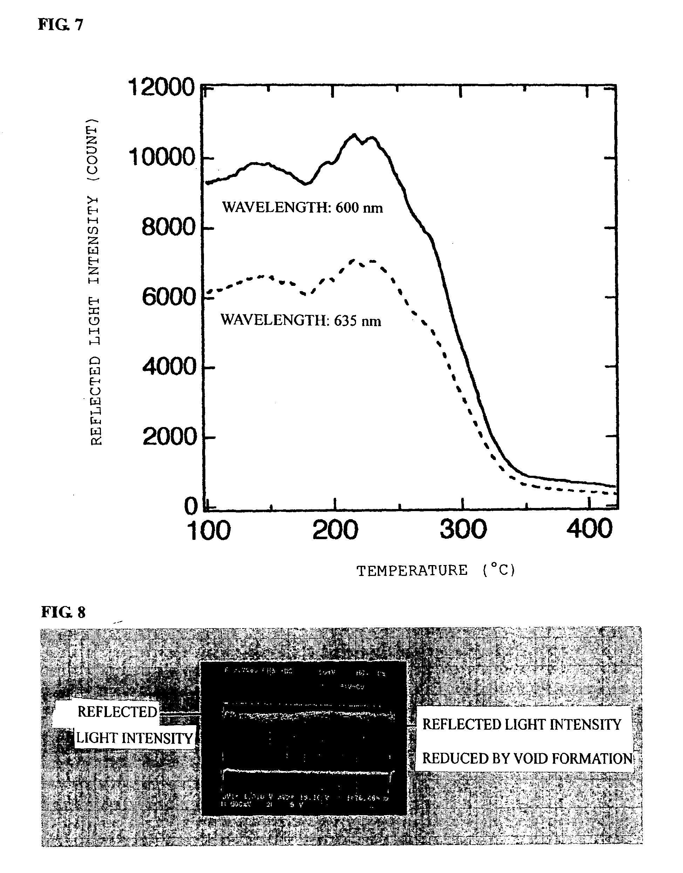

Fig. 7 shows the changes in reflectance with temperature of the pellet having the same composition. Since the reflectance begins to change at 300°C or more and the change is rapid, Figs. 6 and 7 clearly show that the plane having discontinuous refractive indices occurs at a temperature of lower than the melting point 541°C.

The void in the optical disk can be observed as spike-like noises as shown in Fig. 8.

### EXAMPLE 1

A 140 nm thick first dielectric layer 2 made of (ZnS)₈₅(SiO₂)₁₅, a 4 nm thick recording layer 3 made of PtOₓ, a 40 nm thick second dielectric layer 4 made of (ZnS)₈₅(SiO₂)₁₅, a 60 nm thick viscosity-variable material layer 5 made of Ag₆In_{4.4}Sb₆₁Te_{28.6}, and a 100 nm thick third dielectric layer 6 made of (ZnS)₈₅(SiO₂)₁₅ were formed on a polycarbonate substrate 1, as shown in Fig. 1.

For the evaluation of the optical disk, an apparatus DDU-1000 (produced by Pulstec Industrial Co., Ltd.) was used which includes an optical system that can emit a laser beam with a wavelength λ of 635 nm and has a numerical aperture NA of 0.60.

Although Example 1 used the polycarbonate substrate 1, the substrate may be made of glass or any other plastic without particular limitation.

The first dielectric layer 2, the second dielectric layer 4, and the third dielectric layer 6 protect their adjacent layers and control the distribution of light intensity in the optical disk, and can be made of semiconductors, such as Si; oxides, sulfides, and nitrides of metals, such as Zn; and combinations of these materials. Specifically, SiO₂, Si₃N₄, ZnO, ZnS, ZnS-SiO₂ (mixture of ZnS and SiO₂) may be used. In Example 1, the dielectric layers were made of (ZnS)₈₅(SiO₂)₁₅, which is a dielectric material generally used for recording DVD's and CD's.

The recording layer 3 can be made of a material such as PtOₓ that can be decomposed into platinum and oxygen by heat so that the optical constant of the decomposed portion is varied. Any material may be used for the recording layer 3, as long as the material has an optical constant that can be varied by a laser beam, and prevents records written on the recording layer 3 from disappearing at a laser power higher than a laser power that can produce void in the viscosity-variable material layer 5. In Example 1, the recording layer 3 was formed of PtOₓ.

In order that the viscosity-variable material layer 5 is turned into a low-viscosity crystal phase from a high-viscosity crystal phase by heat resulting from laser beam absorption, a material that does not transmit laser beams and has a low thermal conductivity was selected for the material layer 5. Examples of such a material include elementary metals, such as Sb, Bi, and Te; their alloys, such as Sb-Te, Sb-Bi, Bi-Te, and Sb-Bi-Te; and other alloys containing any one of these elements, such as Sb-Zn and Te-Ge. The viscosity-variable material layer 5 may contain Ag, In, or Ge as an impurity. In Example 1, the material layer 5 was formed of Ag₆In_{4.4}Sb₆₁Te_{28.6}, which is generally used in recording CD's and DVD's.

A mark with a length of 200 nm, smaller than or equal to the resolution limit, was written on the optical disk at a linear velocity of 6 m/s, a laser power of 13.0 to 13.5 mW, a frequency of 15 MHz, and a duty ratio of 50%. Deformation recording was thus performed by thermally decomposing the PtOₓ recording layer.

The resulting optical disk on which the 200 nm long mark had been recorded exhibited spike-like reflectance noises shown in Fig. 8 at the same linear velocity of 6 m/s as in writing and a laser power of 4.0 mW. The carrier-to-noise ratio was 45 dB at a higher laser power of 4.6 mW, and thus a practical signal intensity was stably obtained.

### EXAMPLE 2

A 140 nm thick first dielectric layer 2 made of (ZnS)₈₅(SiO₂)₁₅, a 4 nm thick recording layer 3 made of PtOₓ, a 40 nm thick second dielectric layer 4 made of (ZnS)₈₅(SiO₂)₁₅, a 15 nm thick viscosity-variable material layer 5 made of Sb₂Te, and a 100 nm thick third dielectric layer 6 made of (ZnS)₈₅(SiO₂)₁₅ were formed on a polycarbonate substrate 1, in the same manner as in Example 1 except that the viscosity-variable layer was formed a different material.

The resulting optical disk was subjected to evaluation with the same optical disk evaluation apparatus as in Example 1, and exhibited spike-like reflectance noises similar to those shown in Fig. 8 at a linear velocity of 4 m/s. It was thus found that the threshold reproduction power was 3.4 mW.

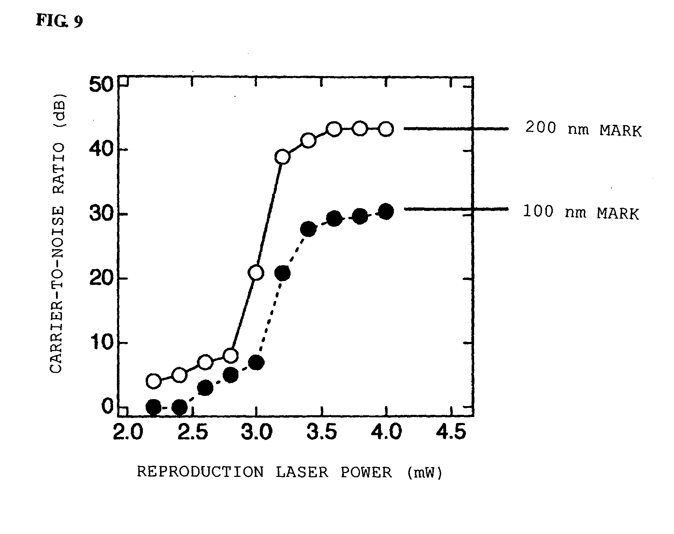

Marks with lengths of 200 nm and 100 nm, smaller than or equal to the resolution limit, were written on the optical disk, and reproduced at varied laser powers. Either mark exhibited the rise of carrier-to-noise ratio at 2.8 to 3.4 mW, as shown in Fig. 9. Thus, super resolution reproduction can be performed at laser powers higher than or equal to the laser power at which the spike-like reflectance noises are observed.

### EXAMPLE 3

Example 3 used the structure shown in Fig. 4. Specifically, a 50 nm thick first dielectric layer 2 made of ZnO, a 15 nm viscosity-variable material layer 5 made of Sb₂Te, and a 50 nm thick second dielectric layer 4 made of ZnO were formed on a polycarbonate substrate 7 having geometric records.

The substrate 7 previously having the records can be made of, for example, glass or plastic, such as polycarbonate, without particular limitation. Example 3 used a polycarbonate substrate.

The resulting optical disk was subjected to evaluation with the same optical disk evaluation apparatus as in Example 1, and exhibited spike-like reflectance noises similar to those shown in Fig. 8 at a linear velocity of 3.5 m/s. It was thus found that the threshold reproduction power was 2.8 mW.

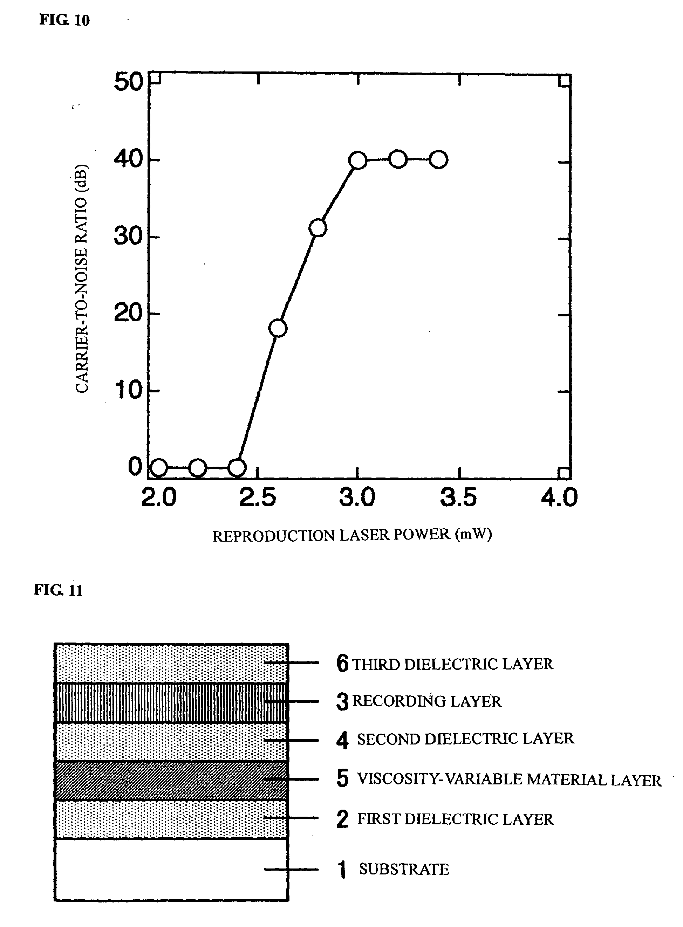

A mark with a length of 150 nm, smaller than the resolution limit, was reproduced at varied laser powers. As a result, a rise of carrier-to-noise ratio was observed at 2.6 to 3.0 mW, as shown in Fig. 10. Thus, super resolution reproduction can be performed at laser powers higher than or equal to the laser power at which the spike-like reflectance noises are observed.

### EXAMPLE 4

In Example 4, the positions of the recording layer 3 and the viscosity-variable material layer 5 were replaced with each other, as shown in Fig. 11. Specifically, a 140 nm thick first dielectric layer 2 made of (ZnS)₈₅ (SiO₂)₁₅ and a 15 nm viscosity-variable material layer 5 made of Sb₂Te were formed on a polycarbonate substrate 1. Subsequently, a second dielectric layer 4 was formed of (ZnS)₈₅(SiO₂)₁₅ to a thickness of 20, 40, 60, 80, 100, or 120 nm on the viscosity-variable material layer 5. Thus six types of composite structures were prepared.

Further, a 4 nm thick recording layer 3 made of PtOₓ and a 60 nm third dielectric layer 6 made of (ZnS)₈₅(SiO₂)₁₅ acting as a protective layer were formed on each composite structure. The viscosity-variable material layer 5 in this layering structure in different order also has super resolution characteristics and can produce the same effect as above.

The resulting six optical disks were subjected to evaluation with the same optical disk evaluation apparatus as in Example 1, and exhibited spike-like reflectance noises similar to those shown in Fig. 8 at a linear velocity of 2.0 m/s. Then, respective threshold reproduction powers were obtained from the spike-like reflectance noises. The reproduction power of Example 4 was defined as a value 0.5 mV higher than the threshold power.

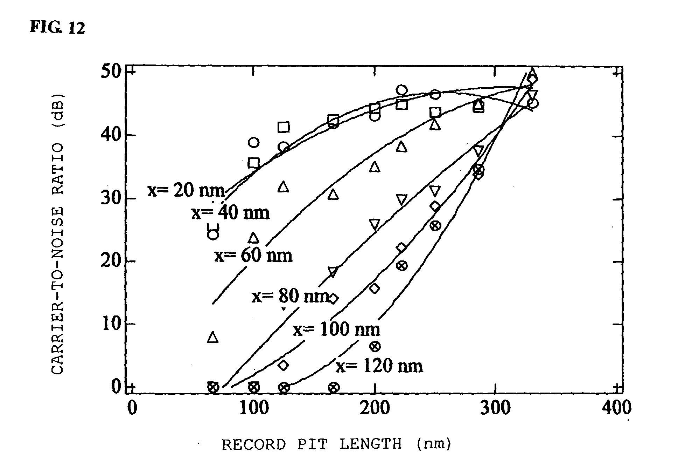

Pits with different sizes of 67 to 300 nm were written on the respective six optical disks, and their super resolution signal intensities were measured at their respective reproduction power previously determined. The results are shown in Fig. 12. As shown in Fig. 12, when the second dielectric layer had a thickness of 20, 40, or 60 nm, higher signal intensity and higher resolution were obtained for super resolution signals of 250 nm. In particular, when the thickness is in the range of 20 to 40 nm, the highest signal intensity was obtained. This shows that the localized light scatters were significantly focused.

According to experiments using a variety of materials, it was found that the focus point of localized light scatters can be changed according to the constitutional elements and the compositions defined by the combinations of elements. In particular, the localized light scatters were significantly focused on a point 10 to 80 nm away from the surface of the material layer. This shows that favorable signal intensity was produced.

## Claims

1. An optical disk comprising:
a substrate;
a recording layer on which information is recorded; and
a material layer whose viscosity is variable.

2. The optical disk according to Claim 1, wherein the viscosity of the material layer varies depending on light intensity or temperature.

3. The optical disk according to Claim 1 or 2, wherein the material layer has a specific region, and the specific region is given a lower viscosity than the other region by irradiating the specific region with light having an intensity more than or equal to the threshold light intensity, or increasing the temperature of the specific region to a predetermined temperature or more.

4. The optical disk according to Claim 3, wherein the specific region and the other region have optical constants that are largely varied at the boundary therebetween.

5. The optical disk according to Claim 4, wherein the material layer transmits or reflects light to produce localized light scatters at the surface thereof, and the localized light scatters are focused on a point a distance x away from the surface of the material layer, depending on the variation of the optical constant of the material layer.

6. The optical disk according to Claim 5, wherein the distance x is in the range of about 10 to 80 nm.

7. The optical disk according to any one of Claims 4 to 6, wherein the recording layer includes a minute pattern smaller than or equal to the optical resolution limit previously written thereon, and the pattern is read out according to the variation of the optical constant of the material layer.

8. The optical disk according to any one of Claims 1 to 7, wherein the material layer contains at least one element selected from the group consisting of Sb, Bi, and Te.

9. The optical disk according to Claim 8, wherein the material layer contains at least one impurity selected from the group consisting of Ag, In, and Ge.

10. A reproducing device for the optical disk as set forth in any one of Claims 1 to 9, comprising a mechanism for reproducing a record pattern smaller than or equal to the optical resolution limit with light having a light intensity capable of, or heat having a temperature capable of reducing the viscosity of the material layer.
